(19) Europäisches Patentamt
European Patent Office
Office européen des brevets

(11) **EP 4 559 716 A1**

(12) **EUROPEAN PATENT APPLICATION**

(43) Date of publication:
28.05.2025 Bulletin 2025/22

(21) Application number: 23211235.9

(22) Date of filing: 21.11.2023

(51) International Patent Classification (IPC):
*B60L 3/00* (2019.01)  *B60L 3/12* (2006.01)
*B60L 58/26* (2019.01)  *H01M 10/613* (2014.01)
*H01M 10/625* (2014.01)  *H01M 10/633* (2014.01)
*H01M 10/635* (2014.01)  *H01M 10/651* (2014.01)
*H01M 10/48* (2006.01)  *B60L 50/60* (2019.01)
*G01R 31/387* (2019.01)

(52) Cooperative Patent Classification (CPC):
B60L 3/0046; B60L 3/12; B60L 50/66; B60L 58/26;
H01M 10/486; H01M 10/613; H01M 10/625;
H01M 10/633; H01M 10/635; H01M 10/651;
B60L 2200/36; B60L 2240/545; B60L 2240/547;
B60L 2240/549; B60L 2260/44;           (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **Volvo Truck Corporation**
**405 08 Göteborg (SE)**

(72) Inventors:
• **FRIBERG, Olle**
**434 46 Kungsbacka (SE)**
• **XU, Yang**
**417 47 Göteborg (SE)**

(74) Representative: **Ström & Gulliksson AB**
**P.O. Box 4188**
**203 13 Malmö (SE)**

(54) **COOLING SYSTEM MONITORING**

(57)   A computer system for monitoring a cooling system associated with a battery pack in a vehicle, the computer system comprising processing circuitry configured to dynamically determine a modelled value, $T_{calc}$, of the temperature of at least one battery cell of the battery pack, determine a measured value, $T_{meas}$, of the temperature of the at least one battery cell of the battery pack, determine an error probability ratio based on the modelled value, $T_{calc}$, and the measured value, $T_{meas}$, and if the ratio is above a threshold, determine that an error is present in the cooling system.

FIG. 3

**(Cont. next page)**

(52) Cooperative Patent Classification (CPC): (Cont.)
H01M 2220/20

**Description**

**TECHNICAL FIELD**

The disclosure relates generally to cooling systems. In particular aspects, the disclosure relates to cooling system monitoring. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Electrical systems such as electric vehicles are often powered from a battery pack comprising a number of battery cells. Dependent on operating conditions, such as load, ambient temperature, and the like, such battery packs can reach high temperatures that may affect operation of the battery cells and, in some cases, reach dangerous temperatures that may have adverse effects on other components of the vehicle.

To remedy this, many electrical vehicles comprise some sort of cooling. It is often the case that a cooling system is provided for the vehicle as a whole, or a subsection of the vehicle, with only a part of the cooling system intended to cool the battery pack. Whilst the cooling system may be monitored outside the battery pack, it is currently not possible to accurately determine how the cooling system is performing with respect to the battery pack specifically.

It is therefore desired to provide systems, methods and other approaches that attempt to resolve or at least mitigate one or more of these issues.

**SUMMARY**

This disclosure provides systems, methods and other approaches for monitoring a cooling system associated with a battery pack in a vehicle. A value for a temperature of the battery pack can be dynamically modelled and compared to a measured value. The comparison can indicate if the real temperature is developing as expected, and therefore whether a cooling system associated with the battery pack is functioning properly.

According to a first aspect of the disclosure, there is provided a computer system for monitoring a cooling system associated with a battery pack in a vehicle, the computer system comprising processing circuitry configured to dynamically determine a modelled value, $T_{calc}$, of the temperature of at least one battery cell of the battery pack, determine a measured value, $T_{meas}$, of the temperature of the at least one battery cell of the battery pack, determine an error probability ratio based on the modelled value, $T_{calc}$, and the measured value, $T_{meas}$, and, if the ratio is above a threshold, determine that an error is present in the cooling system.

The first aspect of the disclosure may seek to enable a determination of whether there is some type of malfunction in a cooling system, for example if there is a coolant leak in the battery pack, and can be used for early detection of thermal runaway in the battery pack.

Optionally in some examples, including in at least one preferred example the processing circuitry is configured to dynamically determine the modelled value, $T_{calc}$, of the temperature by modelling convective heat transfer from the at least one battery cell. A technical benefit may include that an important mode of heat transfer in a battery cell is properly taken into account when monitoring cooling of the battery cell.

Optionally in some examples, including in at least one preferred example, the processing circuitry is configured to model convective heat transfer in the at least one battery cell based on a measured ambient temperature and a measured coolant temperature. A technical benefit may include that convective heat transfer in a battery cell is properly modelled based on real and up to date values in the system when monitoring cooling of the battery cell.

Optionally in some examples, including in at least one preferred example, the processing circuitry is configured to dynamically determine the modelled value, $T_{calc}$, of the temperature by determining a modelled value, $z_k$, of the state of charge of the at least one battery cell. A technical benefit may include that an important factor that affects the temperature of a battery cell is properly taken into account when monitoring cooling of the battery cell.

Optionally in some examples, including in at least one preferred example, the processing circuitry is configured to determine the modelled value, $z_k$, of the state of charge of the at least one battery cell based on a voltage and/or a current of the at least one battery cell. A technical benefit may include that the state of charge of the battery cell is properly modelled based on real and up to date values in the system when monitoring cooling of the battery cell.

Optionally in some examples, including in at least one preferred example, the processing circuitry is configured to determine the modelled value, $z_k$, of the state of charge of the at least one battery cell using a Kalman filter. A technical benefit may include that a modelled value of the state of charge of the battery cell may be provided in an optimal, realtime manner in the presence of noise and uncertainty.

Optionally in some examples, including in at least one preferred example, the processing circuitry is configured to determine the modelled value, $T_{calc}$, of the temperature by solving a differential heat transfer equation. A technical benefit may include the provision of a mathematical solution to the modelling of the temperature of a battery cell.

Optionally in some examples, including in at least one preferred example, the processing circuitry is configured to determine the measured value, $T_{meas}$, of the temperature by receiving a temperature measurement from a temperature sensor associated with the battery pack and/or the at least one battery cell. A technical benefit may include the determination of a measured temperature of a battery cell using simple and existing technology that may already be implemented in the overall system.

Optionally in some examples, including in at least one preferred example, the error probability ratio is the ratio of the conditional probability mass function of an event R when an error occurs, and the conditional probability mass function of an event R when an error does not occur, wherein R is a function of the modelled value, $T_{calc}$, and the measured value, $T_{meas}$. A technical benefit may include the ability to determine the probability of an error in the cooling system while modelling dependencies, incorporating prior information, and updating probability distributions based on observed data.

Optionally in some examples, including in at least one preferred example, the processing circuitry is configured to determine that an amount of coolant is absent from at least part of the cooling system if the ratio is above a first threshold. A technical benefit may include the specific identification of leakage in the cooling system, enabling corrective action to be taken appropriately.

Optionally in some examples, including in at least one preferred example, the processing circuitry is configured to determine that there is no coolant flow in at least part of the cooling system if the ratio is above a second threshold. A technical benefit may include the specific identification of a blockage in the cooling system, enabling corrective action to be taken appropriately.

According to a second aspect of the disclosure, there is provided a vehicle comprising the computer system. The second aspect of the disclosure may seek to provide a vehicle that is able to determine whether there is some type of malfunction in a cooling system and can detect thermal runaway in a battery pack at an early stage.

According to a third aspect of the disclosure, there is provided a computer-implemented method for monitoring a cooling system associated with a battery pack in a vehicle, comprising, by processing circuitry of a computer system, dynamically determining, a modelled value, $T_{calc}$, of the temperature of at least one battery cell of the battery pack, determining a measured value, $T_{meas}$, of the temperature of at least one battery cell of the battery pack, determining an error probability ratio based on the modelled value, $T_{calc}$, and the measured value, $T_{meas}$, and, if the ratio is above a threshold, determining that an error is present in the cooling system.

The third aspect of the disclosure may seek to enable a determination of whether there is some type of malfunction in a cooling system, for example if there is a coolant leak in the battery pack, and can be used for early detection of thermal runaway in the battery pack.

According to a fourth aspect of the disclosure, there is provided a computer program product comprising program code for performing, when executed by processing circuitry, the computer-implemented method. The fourth aspect of the disclosure may seek to provide program code for improved determination of whether there is some type of malfunction in a cooling system. A technical benefit may include that new vehicles and/or legacy vehicles may be conveniently configured, by software installation/update, to determine whether there is some type of malfunction in a cooling system in an improved manner.

According to a fifth aspect of the disclosure, there is provided a non-transitory computer-readable storage medium comprising instructions, which when executed by processing circuitry, cause the processing circuitry to perform the computer-implemented method. The fifth aspect of the disclosure may seek to provide program code for improved determination of whether there is some type of malfunction in a cooling system. A technical benefit may include that new vehicles and/or legacy vehicles may be conveniently configured, by software installation/update, to determine whether there is some type of malfunction in a cooling system in an improved manner.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 schematically shows a side view of a vehicle according to an example.
FIG. 2 schematically shows a cooling system for a vehicle according to an example.

**FIG. 3** is a flow chart of a computer-implemented method according to an example.

**FIG. 4** schematically shows a circuit model for a battery cell according to an example.

**FIG. 5** is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

Battery packs for electric vehicles can reach high temperatures that may affect operation of the battery cells and, in some cases, reach dangerous temperatures that may have adverse effects on other components of the vehicle. Cooling systems are often provided for larger sections of a vehicle, with only a part of the cooling system intended to cool the battery pack. Whilst such cooling systems may be monitored outside the battery pack, it is currently not possible to accurately determine how a cooling system is performing with respect to a battery pack specifically.

To remedy this, systems, methods and other approaches are provided for monitoring a cooling system associated with a battery pack in a vehicle. A value for a temperature of the battery pack can be dynamically modelled and compared to a measured value. The comparison can indicate if the temperature is developing as expected, and therefore whether a cooling system associated with the battery pack is functioning properly. This can enable a determination of whether there is some type of malfunction in the cooling system, for example if there is a coolant leak in the battery pack, and can be used for early detection of thermal runaway in the battery pack.

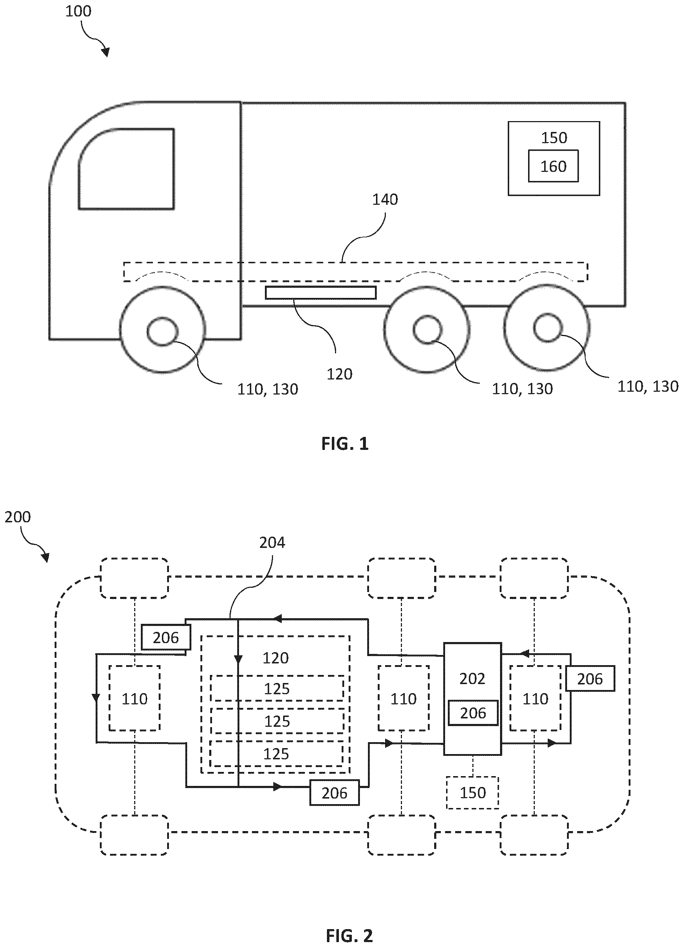

**FIG. 1** schematically shows a side view of an example vehicle **100** of the type considered in this disclosure. The vehicle **100** may be any suitable form of vehicle. For example, the disclosure can be applied in heavy-duty vehicles, such as trucks, buses, and construction equipment, in personal vehicles such as cars, vans, or motorbikes, or in any other suitable form of vehicle. The vehicle **100** comprises a number of axles, each generally having two or more wheels. Whilst three axles are shown, it will be appreciated that any suitable number of axles may be provided. It will also be appreciated that any number of the axles may be driven axles.

The vehicle **100** may comprise one or more sources of propulsion. For example, the vehicle **100** may comprise one or more electrical machines **110** such as electric motors and/or generators. The vehicle **100** may comprise one or more batteries **120** configured to provide power to the electrical machines **110**. In some examples, the vehicle **100** may also include another source of propulsion, for example an internal combustion engine (ICE). The vehicle **100** also comprises a drivetrain (not shown) to deliver mechanical power from the propulsion source (the electrical machines **110** or the ICE) to the wheels.

The electrical machines **110** are configured to drive, e.g. provide torque and/or steering to, one or more axles or individual wheels of the vehicle **100**. The electrical machines **110** can supply either a positive (propulsion) or negative (braking) force. The use of electrical machines **110** to supply a negative force is known as regenerative braking, in which case the electrical machines **110** may be operated as generators, in order to recover energy during braking. The energy recovered from regenerative braking can be stored in the battery **120**.

The battery **120** provides electrical energy to components of the vehicle **100** that require electrical power. The battery **120** is typically rechargeable and is typically a lithium-ion battery, although other types of battery will be readily envisaged. The battery **120** may be a battery pack comprising one or more battery cells. The battery **120** may be controlled by a battery management system (BMS) that may perform tasks such as monitoring the state of the battery **120**, calculating and transmitting data about the battery **120**, high voltage control, protection, diagnostics, and the like. The vehicle **100** may comprise a plurality of batteries or battery packs **120**.

The vehicle **100** may also comprise one or more sets of service brakes **130**. The service brakes **130** can supply a negative (braking) force. The service brakes **130** may be, for example, frictional brakes such as pneumatic brakes. Pneumatic brakes use a compressor to fill the brake with air, which may be powered by the batteries. In some examples, the brakes may be electro-mechanical brakes.

The vehicle may also comprise a cooling system **140**, shown in dashed lines. The cooling system **140** is configured to provide cooling to various components of the vehicle **100**. For example, the cooling system **140** may be configured to provide cooling to the electrical machines **110**, batteries **120**, service brakes **130**, and other components that may require cooling. This is particularly important for the battery **120**, which may stop working if outside its designed operational temperature range. For example, if caused to operate outside this range, there is a risk of a decrease in the capacity of the battery **120**, thermal runaway, or failure. The cooling system **140** is discussed further in relation to **FIG. 2**.

In the example of **FIG. 1**, the vehicle **100** includes a controller in the form of a computer system **150** comprising processing circuitry **160**. The computer system **150** may be a vehicle control unit configured to perform various vehicle (unit) control functions, such as vehicle motion management. For example, the computer system **150** may be configured to control components of the vehicle, for example the electrical machines **110** and the cooling system **140**. The computer system **150** may be may receive control signals from a remote system, implemented at a distance from the vehicle **100**. The computer system **150** may be communicatively coupled to the remote system in any suitable way, for example via a circuit or any other wired, wireless, or network connection known in the art. Furthermore, the communicative coupling may be implemented as a direct connection between the computer system **150** and the remote system, or may be implemented as a connection via one or more intermediate entities.

The vehicle **100** may be a vehicle combination comprising a number of units, including a tractor unit and at least one trailing unit. In some examples, the vehicle **100** may be a vehicle combination comprising a number of units, including a tractor unit and at least one trailing unit. In such examples, each unit may comprise its own electrical machines **110**, battery **120**, service brakes **130**, and the like. In examples where the vehicle **100** is a vehicle combination, the vehicle **100** may include a global controller and a plurality of unit controllers, for example a controller for each unit.

**FIG. 2** schematically shows an example cooling system **200** for a vehicle, such as the cooling system **140** of the vehicle **100** shown in **FIG. 1**. The cooling system **140** is configured to provide cooling to various components of the vehicle **100**, including the battery **120**. In the example of **FIG. 2**, the battery **120** comprises one or more battery packs, each comprising a plurality of battery cells **125**. Components of the cooling system **200** are shown in solid lines, whilst components of the vehicle **100** are shown in dashed lines.

The cooling system **200** comprises a reservoir **202** and a number of fluid conduits **204**. The reservoir **202** contains a coolant to be circulated around the vehicle **100**. The coolant may be any suitable coolant known in the art, for example an ethylene glycol-based coolant, a propylene glycol-based coolant, a water-based coolant, a dielectric coolant, a glycol-water mixture, a fluorinated fluid or a silicone-based coolant.

The coolant may be transported from the reservoir **202** around the vehicle **100** via a system of fluid conduits **204**. The fluid conduits **204** may be configured such that coolant is passed alongside or around particular components of the vehicle, for example the electrical machines **110** and the battery **120**, such that a cooling effect is provided for the components. This is generally known as indirect cooling. The coolant may be transported through the fluid conduits **204** using a pump, impeller, or other suitable method. The coolant may be returned to the reservoir **202** once it has been circulated around the vehicle **100**.

As discussed above, this is particularly important for the battery **120**, which may stop working if outside its designed operational temperature range. As such, the fluid conduits **204** may be configured to pass through the battery pack **120**, for example between or alongside the battery cells **125**.

The cooling system **200** may also comprise a number of sensors **206** configured to sense various operational parameters of the cooling system **200**. The sensors **206** may be disposed in the reservoir **202** or at various positions along the fluid conduits **204**. The sensors **206** may be configured to detect, for example, a temperature or a flow rate of the coolant at a particular point in the cooling system **200**. In this way, operation of the cooling system **200** may be monitored, with measured values from the sensors **206** being comparable to expected values for proper operation of the cooling system **200**.

Operation of the cooling system **200** may be monitored and controlled by a control unit, for example the computer system **150**. The computer system **150** may be communicatively coupled to the cooling system **200** in any suitable way, for example via a circuit or any other wired, wireless, or network connection known in the art. Furthermore, the communicative coupling may be implemented as a direct connection between the computer system **150** and the cooling system **200**, or may be implemented as a connection via one or more intermediate entities. The computer system **150** may be communicatively coupled to different parts of the cooling system **200**, for example to the sensors **206**. In some examples, the cooling system **200** may comprise a local controller that may be configured to monitor and control operation of the cooling system **200**. The local controller may be communicatively coupled to the computer system **150**.

It will be appreciated that the configuration of cooling system **200** shown in **FIG. 2** is merely an example, and different configurations are possible dependent on the shape, size, and arrangement of the battery **120** and other components of the vehicle **100**. For example, the reservoir **202** may be placed in another location, the fluid conduits **204** may be arranged differently (for example to also cool the service brakes **130**), and the coolant may be caused to flow in a different direction from that shown in **FIG. 2**. In some examples, the cooling system **200** may be arranged such that the battery **120** is in direct contact with the coolant, for example submerged in the coolant, in one part of the cooling system **200**. This is generally known as direct cooling.

An issue with cooling systems such as that shown in **FIG. 2** is that, whilst the cooling system **200** may be monitored outside the battery pack **120**, it is not possible to accurately determine how the cooling system **200** is performing with respect to the battery pack **120** specifically. For example, the sensors **206** of the cooling system **200** tend to be located outside the battery pack **120**, or in other parts of the cooling system entirely. This means that the temperature or flow rate of the coolant inside the battery pack **120** cannot be determined, and therefore it is not known whether any error is present, for example if there is a reduced amount of coolant (or indeed no coolant) inside the battery pack **120** or if the coolant is not flowing properly inside the battery pack **120**. To remedy this, sensors **206** can be placed at more appropriate locations relative to the battery pack **120**, however it must then be determined how to assess the measurements provided by these sensors **206** in an appropriate manner.

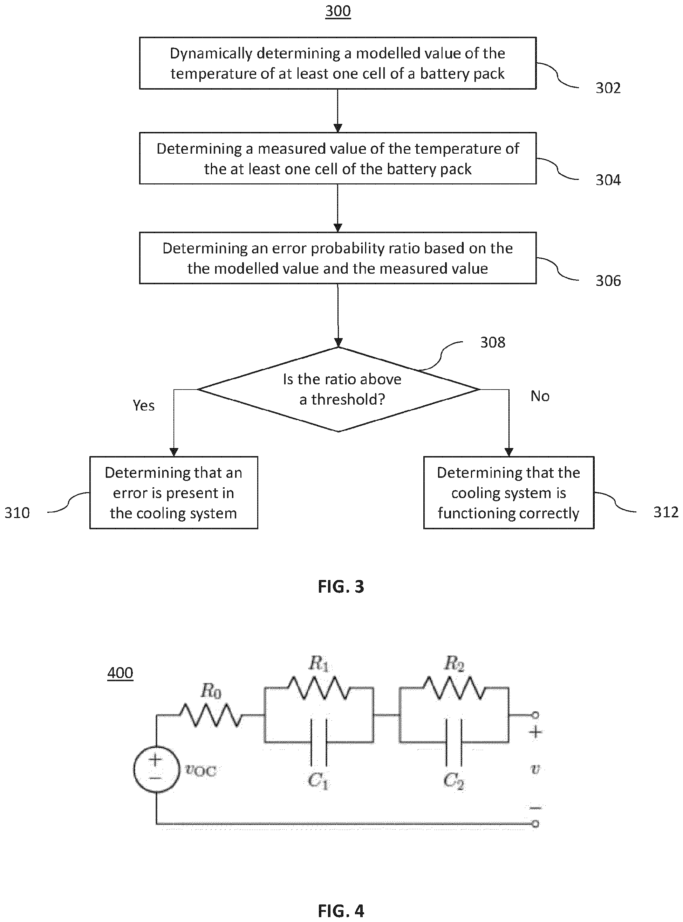

FIG. 3 is a flow chart of a computer-implemented method **300** according to an example. The method **300** enables the determination of whether an error is present in a cooling system, for example the cooling system **200**. In particular, the method **300** is based on determining a difference between a modelled value $T_{calc}$ and a measured value $T_{meas}$ of the temperature in a battery cell **125** of a battery pack **120**. The method **300** may be implemented by processing circuitry of a computer system (e.g., the processing circuitry **160** of the computer system **150** described in relation to **FIG. 1**).

At **302**, a modelled value $T_{calc}$ of the temperature of at least one battery cell **125** of a battery pack **120** is determined dynamically. That is to say, a modelled value $T_{calc}$ of the temperature is determined based on real time operational parameters of the battery cell **125**. This can be achieved using a suitable thermal model of the battery cell **125**.

In some examples, a thermal model of the battery cell **125** can be formulated as:

$$\dot{T}_{calc} = \frac{h_{amb}(T_{amb} - T_{calc}) + h_{cool}(T_{cool} - T_{calc}) + U_{heat}(z, T_{calc}, i)}{mQ_{heat}} \qquad (1)$$

where $\dot{T}_{calc}$ is the heat transfer in the battery cell **125**, $h_{amb}$ is the ambient heat transfer coefficient, $h_{cool}$ is the coolant heat transfer coefficient, $T_{amb}$ is the ambient temperature, $T_{cool}$ is the coolant temperature, $U_{heat}$ is the heat loss from the battery cell **125**, $m$ is the thermal mass of the battery cell **125**, $z$ is the state of charge of the battery cell **125**, $i$ is the current in the battery cell **125**, and $Q_{heat}$ is the heat capacity of the battery cell **125**. $T_{amb}$ and $T_{cool}$ can be determined using appropriate sensors, for example the sensors **206** of the cooling system **200**. The current $i$ in the battery cell **125** can be determined using techniques known in the art. For example, if the battery cells **125** are connected in parallel, a current in the battery pack **120** can be sensed and divided by the number of battery cells **125**. If the battery cells **125** are connected in series, a sensed current in the battery pack **120** can be used. The model of equation (1) assumes there is no coolant leakage in the cooling system **200**.

The model of equation (1) is based on modelling convective heat transfer $\dot{T}_{conv}$ from the battery cell **125**. In particular, the convective heat transfer $\dot{T}_{conv}$ between the battery cell **125** and the ambient, and between the battery cell **125** and the cooling system **200**, is given by:

$$\dot{T}_{conv} = \frac{h_{amb}(T_{amb} - T_{calc}) + h_{cool}(T_{cool} - T_{calc})}{mQ_{heat}} \qquad (2)$$

As such, the convective heat transfer $\dot{T}_{conv}$ from the battery cell **125** is determined based on a measured ambient temperature $T_{amb}$ and a measured coolant temperature $T_{cool}$. In this model, it may be assumed that the battery cell **125** has a uniform temperature throughout, and so there is no conductive heat transfer.

The heat loss $U_{heat}$ from the battery cell **125** is a function of the state of charge $z$ of the battery cell **125**, the temperature $T$ of the battery cell **125**, and the current $i$ in the battery cell **125**. When the battery cell **125** is in use, it is not possible to correlate a correct value of the state of charge to a measured voltage due to dynamic effects in the cell. Therefore, to determine the heat loss $U_{heat}$, a modelled value $z_k$ of the state of charge of the battery cell **125** can be determined. In particular, the modelled value $z_k$ of the state of charge can be determined based on a voltage and a current of the battery cell **125**. When the battery cell **125** is relaxed (i.e. has not been used for some time), the state of charge $z_k$ can be determined for most cell chemistries by measuring voltage.

FIG. 4 schematically shows a circuit model **400** for a battery cell **125** according to an example. $R_0$, $R_1$, and $R_2$ are resistances of respective resistors, $C_1$ and $C_2$ are capacitances of respective capacitors, $v_{OC}$ is the open circuit voltage, and $v$ is the voltage of the battery cell **125**. Based on this circuit model **400**, the state-space model in discrete time may be given by

$$x_{k+1} = \begin{bmatrix} e^{-\frac{\Delta t}{R_1 C_1}} & 0 & 0 \\ 0 & e^{-\frac{\Delta t}{R_2 C_2}} & 0 \\ 0 & 0 & 1 \end{bmatrix} x_k + \begin{bmatrix} \left(1 - e^{-\frac{\Delta t}{R_1 C_1}}\right) R_1 \\ \left(1 - e^{-\frac{\Delta t}{R_2 C_2}}\right) R_2 \\ \frac{\Delta t}{Q} \end{bmatrix} u_k \qquad (3)$$

$$y_k = [1 \quad 1 \quad 0]x_k + R_0 u_k + v_{oc} \qquad (4)$$

$$x_k = \begin{bmatrix} v_{1k} \\ v_{2k} \\ z_k \end{bmatrix} \qquad (5)$$

$$u_k = i_k \qquad (6)$$

$$y_k = v_k \qquad (7)$$

where $v_{1k}$ is the voltage of $R_1$ at time $k\Delta t$ and $v_{2k}$ is the voltage of $R_2$ at time $k\Delta t$.

Based on equations (3) to (7), $v_{1k}$, $v_{2k}$, and/or a modelled value $z_k$ of the state of charge of the battery cell **125** can be determined based on the known (measured) input and output signals $u_k$ and $y_k$. In some examples, $v_{1k}$, $v_{2k}$, and/or the modelled value $z_b$ of the state of charge can be determined using a Kalman filter. The modelled value $z_b$ of the state of charge can then be used to determine the heat loss $U_{heat}$ from the battery cell **125**.

Returning to the thermal model of the battery cell **125**, differential heat transfer equation (1) can be solved for $T$ to give the modelled value $T_{calc}$ of the temperature of the battery cell **125**. In some examples, the equation (1) can be solved numerically using Euler's method. The solution procedure may be formulated as:

1. Set the initial value to

$$T_{calc}(0) = T_{meas}(0) \qquad (8)$$

2. For $k \geq 1$ and $k \in N$

$$
\begin{aligned}
T_{calc}(k\Delta t) \\
\approx T_{calc}\big((k-1)\Delta t\big) + \Delta t \frac{h_{amb}\Big(T_{amb}\big((k-1)\Delta t\big) - T_{calc}\big((k-1)\Delta t\big)\Big)}{mQ_{heat}} \\
+ \Delta t \frac{h_{cool}\Big(T_{cool}\big((k-1)\Delta t\big) - T_{calc}\big((k-1)\Delta t\big)\Big)}{mQ_{heat}} \qquad (9) \\
+ \Delta t \frac{U_{heat}\Big(z\big((k-1)\Delta t\big), T_{calc}\big((k-1)\Delta t\big), i\big((k-1)\Delta t\big)\Big)}{mQ_{heat}}
\end{aligned}
$$

The solution for $T_{calc}$ shown in equations (1) to (9) is one way in which a modelled value $T_{calc}$ of the temperature of a battery cell **125** can be determined dynamically. It will be appreciated that other models and approaches for determining a dynamically modelled value $T_{calc}$ of the temperature of a battery cell **125** may be implemented by the person skilled in the art.

Returning to FIG. 3, at **304**, a measured value $T_{meas}$ of the temperature of the at least one battery cell **125** of the battery pack **120** is determined. The measured value $T_{meas}$ of the temperature may be determined using a temperature sensor associated with a battery cell **125** or the battery pack **120**. For example, the battery pack **120** may comprise additional dedicated temperature sensors, for example mounted on a subset of battery cells **125** of the battery pack **120**.

At **306**, an error probability ratio is determined based on the modelled value $T_{calc}$ and the measured value $T_{meas}$ of the temperature. The error probability ratio is intended to express a likelihood of an error being present in the cooling system **200**. If there is no error, the modelled value $T_{calc}$ and the measured value $T_{meas}$ should be close to each other. If there is an error, the modelled value $T_{calc}$ and the measured value $T_{meas}$ will diverge. The determination of the error probability ratio can be designed to reflect this.

In some examples, the modelled value $T_{calc}$ and the measured value $T_{meas}$ of the temperature may be input to a Bayesian decision method. For example, for an event R in an observation space, it can be stated that:

$$R = (T_{calc}, T_{meas}) \in \mathbb{R}^2 \qquad (10)$$

The error probability ratio can be expressed as the ratio of the conditional probability mass function of an event R when an error occurs, and the conditional probability mass function of an event R when an error does not occur. Any suitable form of error may be modelled, for example leakage, blockage, change of coolant, tempering of the coolant temperature, and the like.

An optimisation problem can then be formulated as follows:

$$min J = C_{00}P_0 Pr(D_0|H_0) + C_{10}P_0 Pr(D_1|H_0) + C_{01}P_1 Pr(D_0|H_1)$$
$$+ C_{11}P_1 Pr(D_1|H_1) \qquad (11)$$

where $C_{00}$, $C_{10}$, $C_{01}$, and $C_{11}$ are cost coefficients, $P_0$ is the probability that an error does not occur, $P_1$ is the probability that an error occurs, $Pr(D_0|H_0)$ is the probability that an error does not occur and is not detected, $Pr(D_1|H_0)$ is the probability that an error does not occur but is detected, $Pr(D_0|H_1)$ is the probability that an error occurs but is not detected, and $Pr(D_1|H_1)$ is the probability that an error occurs and is detected. The cost coefficients $C_{00}$, $C_{10}$, $C_{01}$, and $C_{11}$ should be set with

$$C_{00} < C_{10} \qquad (12)$$

$$C_{01} > C_{11} \qquad (13)$$

$P_0$ and $P_1$ can be determined from historical data or experiments.

The conditional probability mass function of an event R when an error occurs is given as $P_{r|H_1}(R|H_1)$, while the conditional probability mass function of an event R when an error does not occur is given as $P_{r|H_0}(R|H_0)$. This gives the error probability ratio:

$$\frac{P_{r|H_1}(R|H_1)}{P_{r|H_0}(R|H_0)} \qquad (14)$$

The conditional probability mass functions can be determined from historical data or experiments.

Returning to FIG. 3, at 308, it is determined if the error probability ratio is above a threshold. If the difference is above a threshold, it is determined at 310 that an error is present in the cooling system 200. If the difference is not above the threshold, it is determined at 312 that the cooling system 200 is functioning correctly (no error is present).

Following the model above, a threshold can be set as:

$$\frac{P_0(C_{10} - C_{00})}{P_1(C_{01} - C_{11})} \qquad (14)$$

In one example, the error may be leakage, i.e. an amount of coolant being absent from at least part of the cooling system. In this case, $P_0$ is the probability that no leak is present, $P_1$ is the probability that a leak is present, with the other parameters being notated accordingly.

In one example, the error may be a blockage, i.e. there being no coolant flow in at least part of the cooling system. In this case, $P_0$ is the probability that no blockage is present, $P_1$ is the probability that a blockage is present, with the other parameters being notated accordingly.

Other errors may also be detected in the cooling system, such as a change of coolant, tempering of the coolant temperature, and the like radiator faults (including a clogged radiator or radiator cap issues), water pump faults, thermostat faults, cooling fan faults, air in the cooling system, a clogged heater core, coolant contamination, and/or a failed head gasket.

If it is determined at 310 that an error is present in the cooling system 200, an alert may be generated. The alert may be provided as, for example a visual, audio, or tactile alert, indicating that an error is present in the cooling system 200. This may enable corrective action to be taken, for example maintenance or replacement of the cooling system. In some examples, the alert may be dependent on the severity of the error. For example, in some cases, an alert may be generated to indicate to an operator of the vehicle 100 to stop operating the vehicle immediately.

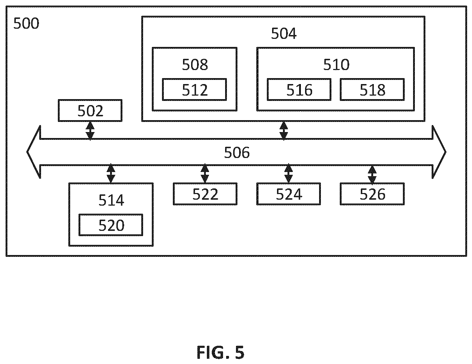

FIG. 5 is a schematic diagram of a computer system 500 for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system 500 may include processing circuitry **502** (e.g., processing circuitry including one or more processor devices or control units), a memory **504**, and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504**. The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., randomaccess memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500**.

The computer system **500** may further include or be coupled to a non-transitory computer-readable storage medium such as the storage device **514**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510**, which may include an operating system **516** and/or one or more program modules **518**. All or a portion of the examples disclosed herein may be implemented as a computer program **520** stored on a transitory or non-transitory computer-usable or computer-readable storage medium (e.g., single medium or multiple media), such as the storage device **514**, which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (150) for monitoring a cooling system (140, 200) associated with a battery pack (120) in a vehicle (100), the computer system (150) comprising processing circuitry (160) configured to dynamically determine a modelled value, $T_{calc}$, of the temperature of at least one battery cell (125) of the battery pack (120), determine a measured value, $T_{meas}$, of the temperature of the at least one battery cell (125) of the battery pack (120), determine an error probability ratio based on the modelled value, $T_{calc}$, and the measured value, $T_{meas}$, and, if the ratio is above a threshold, determine that an error is present in the cooling system (140, 200).

Example 2: The computer system (150) of example 1, wherein the processing circuitry (160) is configured to dynamically determine the modelled value, $T_{calc}$, of the temperature by modelling convective heat transfer from the at least one battery cell (125).

Example 3: The computer system (150) of example 2, wherein the processing circuitry (160) is configured to model convective heat transfer in the at least one battery cell (125) based on a measured ambient temperature and a measured coolant temperature.

Example 4: The computer system (150) of any preceding example, wherein the processing circuitry (160) is configured to dynamically determine the modelled value, $T_{calc}$, of the temperature by determining a modelled value, $z_k$, of the state of charge of the at least one battery cell (125).

Example 5: The computer system (150) of example 4, wherein the processing circuitry (160) is configured to determine the modelled value, $z_k$, of the state of charge of the at least one battery cell (125) based on a voltage and/or a current of the at least one battery cell (125).

Example 6: The computer system (150) of example 4 or 5, wherein the processing circuitry (160) is configured to determine the modelled value, $z_k$, of the state of charge of the at least one battery cell (125) using a Kalman filter.

Example 7: The computer system (150) of any preceding example, wherein the processing circuitry (160) is configured to determine the modelled value, $T_{calc}$, of the temperature by solving a differential heat transfer equation.

Example 8: The computer system (150) of any preceding example, wherein the processing circuitry (160) is configured to determine the measured value, $T_{meas}$, of the temperature by receiving a temperature measurement from a temperature sensor (206) associated with the battery pack (120) and/or the at least one battery cell (125).

Example 9: The computer system (150) of any preceding example, wherein the error probability ratio is the ratio of the conditional probability mass function of an event R when an error occurs, and the conditional probability mass function of an event R when an error does not occur, wherein R is a function of the modelled value, $T_{calc}$, and the measured value, $T_{meas}$.

Example 10: The computer system (150) of any preceding example, wherein the processing circuitry (160) is configured to determine that an amount of coolant is absent from at least part of the cooling system (140, 200) if the ratio is above a first threshold.

Example 11: The computer system (150) of any preceding example, wherein the processing circuitry (160) is configured to determine that there is no coolant flow in at least part of the cooling system (140, 200) if the ratio is above a second threshold.

Example 12: A vehicle (100) comprising the computer system (150) of any preceding example.

Example 13: A computer-implemented method (300) for monitoring a cooling system (140, 200) associated with a battery pack (120) in a vehicle (100), comprising, by processing circuitry (160) of a computer system (150), dynamically determining (302), a modelled value, $T_{calc}$, of the temperature of at least one battery cell (125) of the battery pack (120), determining (304) a measured value, $T_{meas}$, of the temperature of at least one battery cell (125) of the battery pack (120), determining (306) an error probability ratio based on the modelled value, $T_{calc}$, and the measured value, $T_{meas}$, and, if the ratio is above a threshold, determining (310) that an error is present in the cooling system (140, 200).

Example 14: The computer-implemented method (300) of example 13, comprising dynamically determining the modelled value, $T_{calc}$, of the temperature by modelling convective heat transfer from the at least one battery cell (125).

Example 15: The computer-implemented method (300) of example 14, comprising modelling convective heat transfer in the at least one battery cell (125) based on a measured ambient temperature and a measured coolant temperature.

Example 16: The computer-implemented method (300) of any of examples 13 to 15, comprising dynamically determining the modelled value, $T_{calc}$, of the temperature by determining a modelled value, $z_k$, of the state of charge of the at least one battery cell (125).

Example 17: The computer-implemented method (300) of example 16, comprising determining the modelled value, $z_k$, of the state of charge of the at least one battery cell (125) based on a voltage and/or a current of the at least one battery cell (125).

Example 18: The computer-implemented method (300) of example 16 or 17, comprising determining the modelled value, $z_k$, of the state of charge of the at least one battery cell (125) using a Kalman filter.

Example 19: The computer-implemented method (300) of any of examples 13 to 18, comprising determining the modelled value, $T_{calc}$, of the temperature by solving a differential heat transfer equation.

Example 20: The computer-implemented method (300) of any of examples 13 to 19, comprising determining the measured value, $T_{meas}$, of the temperature by receiving a temperature measurement from a temperature sensor (206) associated with the battery pack (120) and/or the at least one battery cell (125).

Example 21: The computer-implemented method (300) of any of examples 13 to 20, wherein the error probability ratio is the ratio of the conditional probability mass function of an event $R$ when an error occurs, and the conditional probability mass function of an event $R$ when an error does not occur, wherein $R$ is a function of the modelled value, $T_{calc}$, and the measured value, $T_{meas}$.

Example 22: The computer-implemented method (300) of any of examples 13 to 21, comprising determining that an amount of coolant is absent from at least part of the cooling system (140, 200) if the ratio is above a first threshold.

Example 23: The computer-implemented method (300) of any of examples 13 to 22, comprising determining that there is no coolant flow in at least part of the cooling system (140, 200) if the ratio is above a second threshold.

Example 24: A computer program product comprising program code for performing, when executed by processing circuitry (160), the computer-implemented method (300) of any of examples 13 to 23.

Example 25: A non-transitory computer-readable storage medium comprising instructions, which when executed by processing circuitry (160), cause the processing circuitry to perform the computer-implemented method (300) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (150) for monitoring a cooling system (140, 200) associated with a battery pack (120) in a vehicle (100), the computer system (150) comprising processing circuitry (160) configured to:

   dynamically determine a modelled value, $T_{calc}$, of the temperature of at least one battery cell (125) of the battery pack (120);
   determine a measured value, $T_{meas}$, of the temperature of the at least one battery cell (125) of the battery pack (120);
   determine an error probability ratio based on the modelled value, $T_{calc}$, and the measured value, $T_{meas}$; and
   if the ratio is above a threshold, determine that an error is present in the cooling system (140, 200).

2. The computer system (150) of claim 1, wherein the processing circuitry (160) is configured to dynamically determine the modelled value, $T_{calc}$, of the temperature by modelling convective heat transfer from the at least one battery cell (125).

3. The computer system (150) of claim 2, wherein the processing circuitry (160) is configured to model convective heat transfer in the at least one battery cell (125) based on a measured ambient temperature and a measured coolant temperature.

4. The computer system (150) of any preceding claim, wherein the processing circuitry (160) is configured to dynamically determine the modelled value, $T_{calc}$, of the temperature by determining a modelled value, $z_k$, of the state of charge of the at least one battery cell (125).

5. The computer system (150) of claim 4, wherein the processing circuitry (160) is configured to determine the modelled value, $z_k$, of the state of charge of the at least one battery cell (125) based on a voltage and/or a current of the at least one battery cell (125).

6. The computer system (150) of claim 4 or 5, wherein the processing circuitry (160) is configured to determine the modelled value, $z_k$, of the state of charge of the at least one battery cell (125) using a Kalman filter.

7. The computer system (150) of any preceding claim, wherein the processing circuitry (160) is configured to determine the modelled value, $T_{calc}$, of the temperature by solving a differential heat transfer equation.

8. The computer system (150) of any preceding claim, wherein the processing circuitry (160) is configured to determine the measured value, $T_{meas}$, of the temperature by receiving a temperature measurement from a temperature sensor (206) associated with the battery pack (120) and/or the at least one battery cell (125).

9. The computer system (150) of any preceding claim, wherein the error probability ratio is the ratio of the conditional probability mass function of an event R when an error occurs, and the conditional probability mass function of an event R when an error does not occur, wherein R is a function of the modelled value, $T_{calc}$, and the measured value, $Tmeas$.

10. The computer system (150) of any preceding claim, wherein the processing circuitry (160) is configured to determine that an amount of coolant is absent from at least part of the cooling system (140, 200) if the ratio is above a first threshold.

11. The computer system (150) of any preceding claim, wherein the processing circuitry (160) is configured to determine that there is no coolant flow in at least part of the cooling system (140, 200) if the ratio is above a second threshold.

12. A vehicle (100) comprising the computer system (150) of any preceding claim.

13. A computer-implemented method (300) for monitoring a cooling system (140, 200) associated with a battery pack (120) in a vehicle (100), comprising, by processing circuitry (160) of a computer system (150):

dynamically determining (302), a modelled value, $T_{calc}$, of the temperature of at least one battery cell (125) of the battery pack (120);

determining (304) a measured value, $T_{meas}$, of the temperature of at least one battery cell (125) of the battery pack (120);

determining (306) an error probability ratio based on the modelled value, $T_{calc}$, and the measured value, $T_{meas}$; and

if the ratio is above a threshold, determining (310) that an error is present in the cooling system (140, 200).

14. A computer program product comprising program code for performing, when executed by processing circuitry (160), the computer-implemented method (300) of claim 13.

15. A non-transitory computer-readable storage medium comprising instructions, which when executed by processing circuitry (160), cause the processing circuitry to perform the computer-implemented method (300) of claim 13.

100

150

160

140

120

110, 130

110, 130

110, 130

**FIG. 1**

200

204

206

120

125

125

125

206

110

110

202

206

110

206

150

**FIG. 2**

300

Dynamically determining a modelled value of the
temperature of at least one cell of a battery pack — 302

Determining a measured value of the temperature of
the at least one cell of the battery pack — 304

Determining an error probability ratio based on the
the modelled value and the measured value — 306

308

Is the ratio above
a threshold?

Yes

No

Determining that an
error is present in
the cooling system

310

Determining that the
cooling system is
functioning correctly — 312

**FIG. 3**

400

**FIG. 4**

**FIG. 5**

Europäisches
Patentamt

European
Patent Office

Office européen
des brevets

## EUROPEAN SEARCH REPORT

**Application Number**

EP 23 21 1235

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 975 711 A (BORGWARD AUTOMOTIVE CHINA CO LTD) 5 July 2019 (2019-07-05) | 1,8, 10-15 | INV.<br>B60L3/00 |
| A | * paragraphs [0006] - [0012], [0040] * | 2-7,9 | B60L3/12<br>B60L58/26 |
| X | CN 111 211 374 A (BOSCH GMBH ROBERT) 29 May 2020 (2020-05-29) | 1-8, 10-15 | H01M10/613<br>H01M10/625 |
| A | * paragraphs [0013] - [0024], [0057] - [0067] * | 9 | H01M10/633<br>H01M10/635<br>H01M10/651 |
| X | US 2007/120537 A1 (YAMAMOTO TAKAO [JP]) 31 May 2007 (2007-05-31) | 1,8, 10-15 | H01M10/48<br>B60L50/60 |
| A | * paragraphs [0022] - [0033], [0050] - [0053], [0069] - [0081]; figure 8 * | 2-7,9 | G01R31/387 |
| A | US 2016/079633 A1 (WAHLSTROM MICHAEL [US] ET AL) 17 March 2016 (2016-03-17) * paragraphs [0001], [0005] - [0008], [0031] - [0037] * | 1-15 | |

**TECHNICAL FIELDS SEARCHED (IPC)**

B60L
H01M
G01R

The present search report has been drawn up for all claims

| Place of search | Date of completion of the search | Examiner |
|---|---|---|
| The Hague | 29 April 2024 | Akbudak, Tarik |

EPO FORM 1503 03.82 (P04C01)

## ANNEX TO THE EUROPEAN SEARCH REPORT
## ON EUROPEAN PATENT APPLICATION NO.

**EP 23 21 1235**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-04-2024**

| Patent document cited in search report | | Publication date | Patent family member(s) | | Publication date |
|---|---|---|---|---|---|
| CN 109975711 | A | 05-07-2019 | NONE | | |
| CN 111211374 | A | 29-05-2020 | CN | 111211374 A | 29-05-2020 |
| | | | DE | 102018220045 A1 | 28-05-2020 |
| US 2007120537 | A1 | 31-05-2007 | JP | 5008863 B2 | 22-08-2012 |
| | | | JP | 2007157348 A | 21-06-2007 |
| | | | US | 2007120537 A1 | 31-05-2007 |
| US 2016079633 | A1 | 17-03-2016 | CN | 105424221 A | 23-03-2016 |
| | | | DE | 102015115072 A1 | 17-03-2016 |
| | | | US | 2016079633 A1 | 17-03-2016 |

EPO FORM P0459

For more details about this annex : see Official Journal of the European Patent Office, No. 12/82